# EUROPEAN PATENT APPLICATION

(11) **EP 3 104 325 A1**
(43) Date of publication of application: **14.12.2016**
(21) Application number: 16275082.2
(22) Date of filing: 10.06.2016
(51) Int. Cl.: G06Q 40/06

(54) **COMPUTER-IMPLEMENTED OBJECT-ORIENTED PORTFOLIO OPTIMISATION SYSTEM, METHOD AND USER INTERFACE**

(30) Priority: 10.06.2015 GB 201510097; 10.06.2015 US 201562173672 P
(71) Applicant: Alpima Limited, London EC3V 3QQ (GB)
(72) Inventor: Mendelsohn, Pierre, London, Greater London W1W 5PL (GB)
(74) Representative: Williams Powell

(57) **Abstract**

A computer-implemented object-oriented portfolio optimisation system, method and user interface are disclosed. The system includes a data repository (40) for storing objects to be managed by the system, each object representing a portfolio or part of a portfolio. The system further including a data feed (50), a processor (20) and a memory (30) encoding computer program code which is executed by the processor (20) to provide the investment portfolio optimisation system. The system including a user interface for receiving user inputs defining and/or managing said objects, wherein the or each object comprises one or more constituents, each constituent having a link to the data feed from which data on the constituent can be accessed, each object further defining one or more rules and one or more attributes associated with the object, the rules and attributes specifying how an investment into the one or more constituents is to be applied. The system being configured to optimise each object according to a schedule associated with the object including, for each iteration of optimisation, obtain data via the data feed corresponding to the constituents and determine optimal weights for allocations to the object in dependence on the obtained data and rules and attributes of the object and cause storage of the object and weights in the data repository.

## Description

### Field of the Invention

The present invention relates to a computer-implemented, object-oriented, portfolio optimisation system, method and user interface that are particularly applicable to the creation and optimisation of systematic, rule-based financial portfolios and products such as exchange traded funds.

### Background to the Invention

Systematic investment strategies are generally complex in nature and often aren't transparent or flexible. A managed fund, for example, may provide details as to the types of assets in which it invests, details of its general investment strategy and past performance. However, the assets it invests into and how it actually operates is typically down to actions of its fund manager.

An ETF, or exchange traded fund, is one type of financial portfolio. It is a marketable security that tracks assets such as an index, a commodity, bonds, or a basket of assets like an index fund.

While it is possible for individuals and institutions to manage their own investments at a relatively low level, the tools and systems available are often crude, unintuitive and require a significant level of knowledge and experience to achieve performance even approximating that of a poor to average managed fund.

### Statement of Invention

According to an aspect of the present invention, there is provided a computer-implemented object-oriented portfolio optimisation system including a data repository for storing objects to be managed by the system, each object representing a portfolio or part of a portfolio, the system further including a data feed, a processor and a memory encoding computer program code which is executed by the processor to provide the investment portfolio optimisation system, the system including:
a user interface for receiving user inputs defining and/or managing said objects, wherein the or each object comprises one or more constituents, each constituent having a link to the data feed from which data on the constituent can be accessed, each object further defining one or more rules and one or more attributes associated with the object, the rules and
attributes specifying how an investment into the one or more constituents is to be applied;
the system being configured to optimise each object according to a schedule associated with the object including, for each iteration of optimisation:
   obtaining data via the data feed corresponding to the constituents; and,
   determining optimal weights for allocations to the object in dependence on the obtained data and rules and attributes of the object and cause storage of the object and weights in the data repository.

Preferably, each object is formed from a default object form.

Preferably, each object is stored in the repository as a separate object.

Preferably, each object has an associated unique identifier and is referenced in said repository and in a portfolio by said unique identifier.

Preferably, the system is triggerable to determine optimal attributes and/or rules for an object.

The user interface may graphically represent the object, constituents, rules, parameters and attributes as manipulable and combinable graphical items, combining, changing and/or re-ordering of the graphical; items being processed to determine and apply corresponding changes to the object.

The system is preferably arranged to obtain data on the or each constituent via the data feed in dependence on the constituent's respective link and to evaluate the portfolio in dependence on the obtained data and on the rules and attributes associated with the object.

A constituent may comprise a previously defined one of said objects stored in the data repository.

According to another aspect of the present invention, there is provided a computer-implemented object-oriented portfolio optimisation method comprising:
storing, in a data repository, objects to be managed, each object representing a portfolio or part of a portfolio, wherein the or each object comprises one or more constituents, each constituent having a link to the data feed from which data on the constituent can be accessed, each object further defining one or more rules and one or more attributes associated with the object, the rules and attributes specifying how an investment into the one or more constituents is to be applied;
receiving, via a user interface, user inputs defining and/or managing said objects, optimising each object according to a schedule associated with the object including, for each iteration of optimisation:
   obtaining data via a data feed corresponding to the constituents; and,
   automatically determining optimal weights for allocations to the object in dependence on the obtained data and rules and attributes of the object and cause storage of the object and weights in the data repository.

The method may further comprise inheriting at least aspects of each object from a default object form.

The method may further comprise storing the portfolio or part of portfolio in its object representation form.

Preferably, each object has an associated unique identifier, the method further comprising referencing objects by said unique identifier.

The method may further comprise determining optimal attributes and/or rules for an object.

The method may further comprise displaying, via the user interface a graphical representation of the object, constituents, rules, parameters and attributes, accepting user inputs interacting with said graphical representation to manipulate or combine elements of said graphical representation and applying corresponding changes to the object in dependence on said user inputs.

The method may further comprise obtaining data on the or each constituent via the data feed from a remote data source in dependence on the constituent's respective link and evaluating the portfolio in dependence on the obtained data and on the rules and attributes associated with the object.

Preferably, the system is triggerable to determine optimal attributes and/or rule parameters for an object.

Preferably, the user interface graphically represents the object, constituents, rules, parameters and attributes as manipulable and combinable graphical items, combining, changing and/or re-ordering of the graphical items being processed to determine and apply corresponding changes to the object. For example, a rule may be represented as an object that at least partially encapsulates constituents. In this way, a user can drag and drop the encapsulating rule and insert constituents to which the rule applies before attaching blocks or other elements representing attributes, parameters etc. Another rule may also be added as a further item encapsulating other constituents, for example.

Embodiments of the present invention seek to provide a system, method and user interface in which financial portfolios can be optimally created and managed using an object-oriented approach. Each portfolio or a component of a portfolio is created, stored and interacted with as an instance of an object.

Due to the manner in which they are created and stored, embodiments enable users to treat portfolios as objects that can be systematically defined and optimised. Each portfolio may define a systematic investment strategy that can be communicated, stored, created or manipulated by embodiments of the present invention using the object-oriented representation. Embodiments of the present invention include a method and user interface that are particularly applicable to the creation and optimisation of systematic investment strategies which may contain exchange traded funds, stocks and other financial instruments.

Embodiments of the present invention provide a framework which enable quantitative investment strategies to be described systematically and handled as modular objects.

Once described in this way, a particular quantitative investment strategy, can be handled as a unique object, with a unique identifier for storage and re-use.

Object-oriented representation allows for systematic optimization according to specific criteria such as historical returns, volatility, drawdown, Sharpe Ratio etc. Criteria can also be forward-looking, for example based on Monte Carlo simulations, which have their own parameters, thereby adding new degrees of freedom to the problem. It is also possible to optimise a strategy in accordance to several criteria simultaneously such as minimising risk, drawdowns and maximising returns at the same time.

Once the attributes of a strategy have been set (base currency, constituents, allocation rules, external rules, leverage), the process of optimising the strategy can then be performed. Preferably, this includes finding the combination of parameters which yields the best outcome according to chosen criteria.

Investors and advisors are able to build objects representing systematic investing strategies as objects and optimise them according to pre-defined criteria such as historical or forward-looking performance.

Embodiments seek to improve the way investors approach investing for the long term and systematise the way they chose and build investment strategies. Using embodiments of the present invention, users such as investors are able to make better, more informed investment decisions. Embodiments can be implemented in a number of ways: via dedicated applications, online via the web and via mobile devices. Delivery can be performed at low cost to a very broad user base.

Embodiments of the present invention are particularly applicable to definition and optimisation of quantitative investment strategies. A quantitative investment strategy is a strategy which strictly follows pre-defined rules, such as regular re-balancing to meet certain criteria. A classic example is a portfolio whose weights are re-balanced periodically in order to satisfy the condition that its volatility be minimised based on what is known at each rebalancing date of the volatility of, and the correlations between, members of the portfolio. Since its introduction by Markowitz in 1952, so-called Modern Portfolio Theory, otherwise known as MPT, opened the door to a widespread type of quantitative investment strategies, which evolved over time to include numerous variations and adaptions. In the 90's and 2000's, the popularity of quantitative investing rose as more strategies were introduced and new terms and concepts appeared such as factor investing, and smart beta. As with other investment strategies, quantitative investment strategies often lack transparency and flexibility and often simply follow predefined rules and structures. In contrast, embodiments of the present invention seek to provide systems and methods in which investment strategies can be defined, evaluated, manipulated and/or executed systematically and easily. Investment strategies are formed from constituents which preferably are building blocks that have a generic form and are customised during definition of the investment strategy

In one embodiment, a user interface may be provided that accepts inputs on graphical representations of objects representing strategy constituents in order for an investment strategy to be defined or manipulated. Preferably, the constituents are stored in a data repository and linked to form the defined investment strategy.

Importantly, embodiments of the present invention seek to provide a framework which enables one to describe, handle, store and analyse quantitative investment strategies as modular objects defined by individual attributes and parameters.

Embodiments enable investors to build quantitative investing strategies as modular objects easily through a simple user interface, and subsequently optimize them according to pre-defined criteria such as historical or simulated forward-looking performance.

Advantageously, embodiments improve the way investors think about medium to long-term investing and systematise the way they chose and build investment strategies - something that traditionally could not be done by the investor and required specialist assistance. Advantageously, embodiments help investors make better, more informed investment decisions. Embodiments may have various forms, for example via dedicated applications, online via the internet, via mobile devices etc. Delivery can be performed at low cost to a very broad user base.

### Brief Description of the Drawings

Embodiments of the present invention will now be described, by way of example only, with reference to the accompanying drawings in which:
Figure 1 is a schematic diagram of a computer-implemented investment portfolio optimisation system according to an embodiment of the present invention;
Figure 2 is a schematic diagram of an object according to one embodiment;
Figures 3a-3b are schematic diagrams of example objects according to embodiments of the present invention;
Figures 4, 5 and 6 are illustrations of aspects of a user interface according to an embodiment of the present invention;
Figure 7 is a schematic diagram illustrating a simple functional representation of components of a system according to an embodiment of the present invention.

### Detailed Description

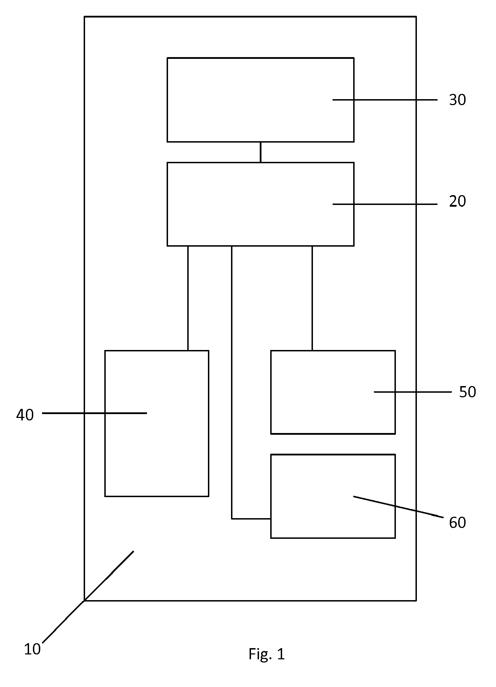

Figure 1 is a schematic diagram of a computer-implemented object-oriented portfolio optimisation system according to an embodiment of the present invention.

The system 10 includes a processor 20 and a memory 30 encoding computer program code which is executed by the processor 20 as described below. The system 10 further includes a data repository 40 for storing objects created by and/or to be managed by the system 10. The system also includes a data feed 50 and a user interface 60.

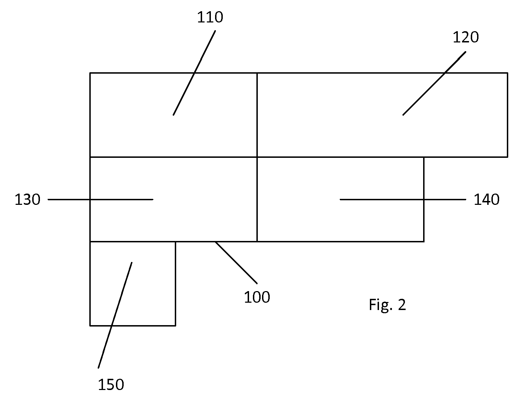

In operation, objects are created and/or monitored and/or managed by the system by executing the computer program code in the memory 30 by the processor. Each object preferably is inherited from a default form as illustrated in Figure 2.

Each object represents a manageable and optimised (and further optimisable) investment portfolio, although in practice, multiple objects may themselves be combined to form a composite investment portfolio.

Each object is formed from one or more attributes as is discussed in detail below. The attributes include constituent assets (referred to here as constituents), rules and parameters applicable to the object 100.

An object 100 includes one or more constituents 110. Each constituent has a link 120 to a data feed from which data on the constituent can be accessed. Each object also defines one or more rules 130 and rule parameters 140 and one or more other attributes 150 associated with the object 100. The object can be evaluated by retrieving data on the constituent(s) and applying the rules and other attributes to it.

A constituent may, for example, be a component of the portfolio such as an asset that is invested in. There may be one or more constituents which may include stocks, ETFs, futures, warrants, derivatives or any other tradable instruments. At any point in time, a strategy consists of a portfolio made up of these components, each having a particular weight (weighting is discussed below).

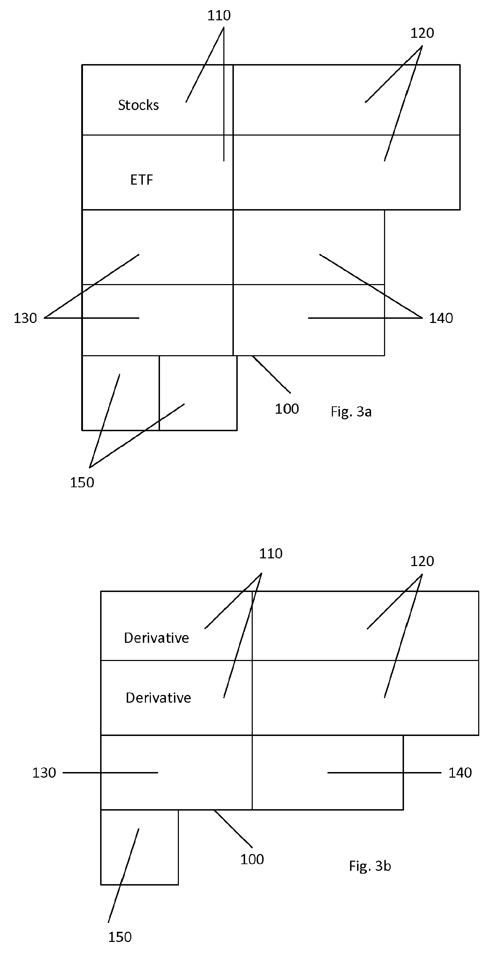

It will be appreciated that an object may include a number of different constituents of different types, as shown in Figure 3a, it may include different constituents of the same type as shown in Figure 3b or may include a single constituent as shown in Figure 2.

Rules may be internal or external.

Internal rules define an optimised weighting scheme (allocation methodology) used to determine the allocation across the various constituents. Internal rules may also be used to periodically re-allocate (re-optimise) the portfolio, using a pre-defined set of parameters such as rebalancing frequency. An internal rule includes a set of parameters 140, referred to as allocation parameters, such as rebalancing frequency and observation window. Internal rules applied to a set of constituents result in a portfolio, whose weights will vary over time based on the internal rule. Various weighting schemes may be applied. Examples include fixed weights, mean variance optimisation, market capitalisation weighting, price based weighting, minimum variance etc.

External rules define a strategy applied to the portfolio according to pre-determined criteria. This may, for example, define a set of rules that is applied to the overall portfolio according to pre-determined criteria in order to alter its risk/return profile according to specific requirements. An example can be a binary switch that lets the portfolio be invested or not (risk on/off) depending on certain signals. Other well-known examples include Constant Proportion Portfolio Insurance (CPPI) or Volatility Targeting. Such rules can also be the result of overlay strategies such as FX hedging or other types of derivatives hedging designed to constrain the risk/return profile of the strategy in accordance to specific criteria. External rules have their own indicators, logic, and parameters. Examples include risk on/off depending on certain signals, Constant Proportion Portfolio Insurance or Volatility Targeting. Such rules would typically apply a multiplicative factor to the portfolio's exposure, to either increase it or decrease it in order to meet certain conditions. For example, a Risk On / Risk Off strategy applies a factor or either 0 or 1 to the strategy depending on certain indicators. A Volatility Targeting strategy would apply a factor such that the actual volatility of a strategy be in line with a pre-specified target. Another type of external rule is the application on an FX overlay performed using foreign exchange futures and/or cash for currency hedging, or derivatives to shape the risk returns profile in a certain way.

Another attribute may be a leverage factor to be applied to the overall strategy in order to increase or decrease its risk. An unlevered strategy is referred to as 1 x, while 2x indicates 1:1 leverage and a 0.5x indicates 50% exposure. Leverage can be reset periodically or not depending on user preferences.

In order to produce the object, the system 10 processes the selected constituents to obtain data from the data feed corresponding to the constituent(s) and then applies rules and their parameters and attributes to determine optimal weights for allocations to the object. This is described in more detail below.

An example object for a USD-denominated pension portfolio object made of US-listed ETFs is set out below:

| **Attribute Type** | **Attribute and Parameters** |
|---|---|
| Base Currency | USD |
| Constituents | SPY US, VEA US, VWO US, DBC US, IEF US, LQD US |
| Internal Rules (Allocation Methodology) | Global Minimum Variance - GMV |
| | Allocation Parameters |
| | - Rebalancing frequency: Monthly |
| | - Observation Window: 1 year |
| External Rules | Risk On / Off: Risk On (i.e. always On) FX Overlay: None |
| Leverage Factor | 1x (no leverage) |

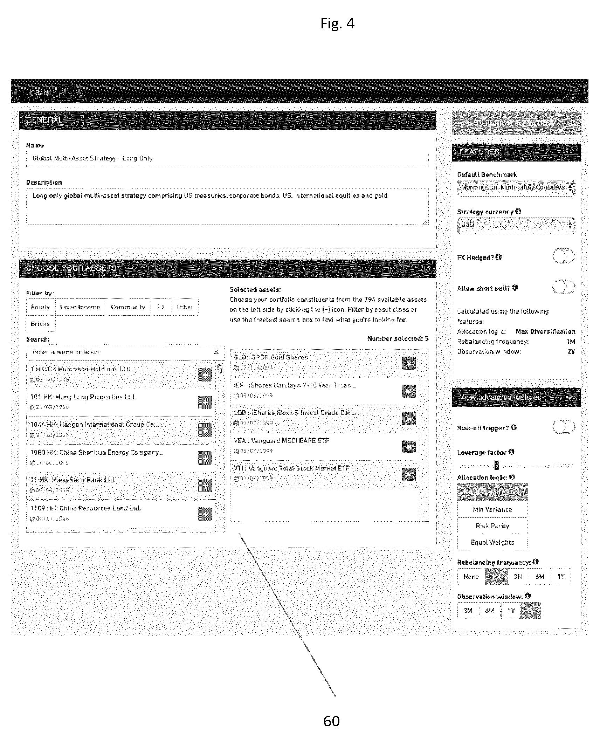

Figures 4-7 illustrate aspects of a user interface to provide functionality to users (i.e. investors or advisors) to define and systematically optimise objects representing investment strategies according to pre-determined criteria, such as historical returns and/or Sharpe ratio.

To create a new strategy, a user accesses the system 10 via the user interface 60. An example user interface is illustrated in Figure 4. The user selects a base currency and the constituent assets from which an object 100 is to be formed. An internal rule (allocation methodology) is also selected that defines the optimisation to be applied in order to determine the weights for constituents. The weights define, proportionately, how funds are to be allocated to assets within the object 100. Allocation parameters associated with the internal rule are also selected, as are any external rules to be applied. These are used to populate a base form of an object 100.Optionally, criteria to optimise may be selected. The user interface includes a control selectable by the user that triggers the system 10 to identify the set of parameters yielding the best results according to the chosen allocation criteria and optimisation criteria.

The processor 20 executes (or passes the data to) a calculation engine 200 that performs a systematic iteration of possible parameters and attributes which are each scored according to the optimisation criteria. The calculation engine 200 determines optimal weighting of the constituents by accessing the data feed 50 and retrieving data on each constituent according to the internal rules and allocation parameters. In the above example an observation window of 1 year has been set for global minimum variance so data on each constituent for the window of 1 year for determining global minimum variance is obtained. The calculation engine 200 evaluates each constituent in dependence on the retrieved data and on the internal rule(s) to determine an optimal weighting distribution for the constituents in the object 100. Preferably, weights of the constituents indicate the percentage proportion of an investment the respective constituent receives when the object is the subject of an investment.

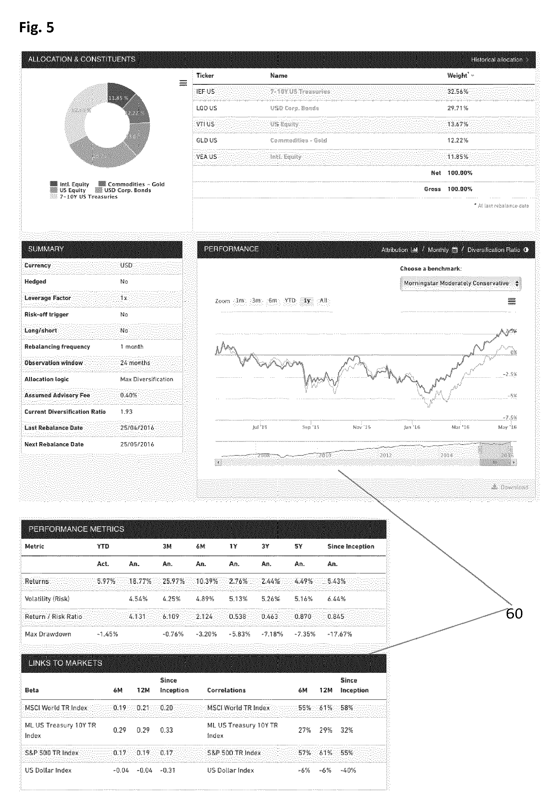

The results of the iterations are ordered by score and presented to the user via the user interface 60. An example can be seen in Figure 5 (weight proportions can be seen in the chart in the top left corner of Figure 5).

Adding rules such as Risk On / Risk Off triggers further iteration as a result of adding new parameters to the task, which can, if required be subdivided in blocks such as internal and external rules.

Embodiments of the present invention enable objects to be optimised according to certain criteria such as historical returns, volatility, drawdown, Sharpe Ratio etc. Criteria can also be forward-looking, for example based on Monte Carlo simulations, which would rely on their own sets of parameters, thereby adding new degrees of freedom to the problem. It will be appreciated that the data feed 50 may be on historic performance or values or may be based on some other analysis or projection. It also need not be already existing data and could be a link to a system that creates such projections or analysis on demand.

At this stage, the weights are added to the object 100 and it is stored in the repository 40 ready for investment.

The rebalancing frequency allocation parameter defines how often the calculation engine 200 should revisit the object and re-optimise the weights. In the above example, the calculation engine 200 revisits the object on a monthly schedule and on each revisit will re-calculate the weights in order to determine their optimal values for the 1 year window up to that date. Historic weights are preferably stored in the object 100 so that performance of the strategy can be also evaluated.

In one embodiment, the system 10 is arranged to provide optimisation of the internal rules and parameters. Once constituents and the optimisation metric has been chosen, the process of finding an optimal portfolio can, in its most simplistic form, consist of running every single combination of possible parameters and selecting the set of parameters which yield the best outcome according to chosen metrics.

In the example provided above, a comprehensive parameter iteration could reveal that based on historical Sharpe ratio measurements, the optimal set of parameters is a quarterly rebalancing frequency with a one-year observation window.

Such analysis can be extended to more complex optimisations in which strategies have larger parameter sets, but the framework to perform them remains essentially the same.

In other embodiments, the system 10 may interface to an optimisation system such as a neural network, genetic algorithm or similar in order to optimise parameters and attributes in dependence on a specified cost function/optimisation requirement.

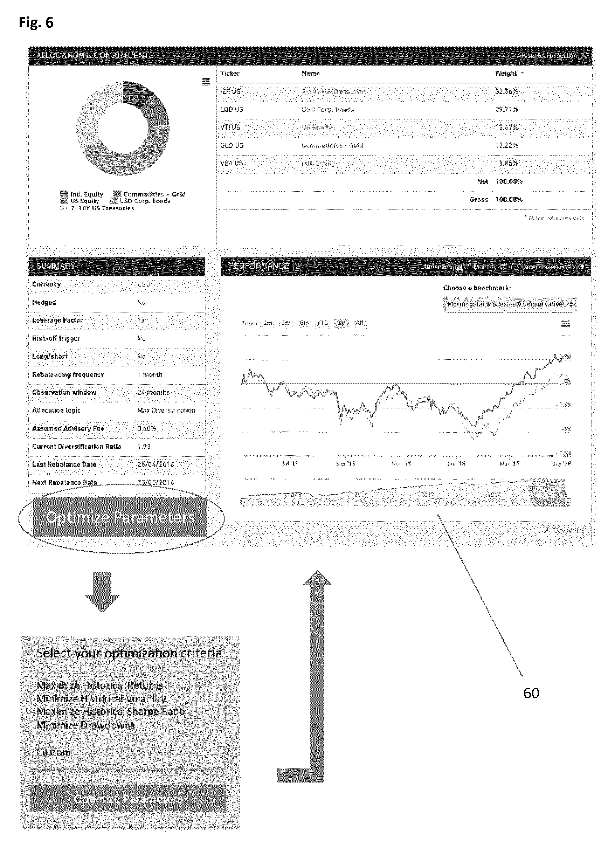

Figure 4 is an illustration of the user interface 50 in which the user assembles an object by dragging and dropping boxes from the "Component & Parameter" area on the left to the "Selected Assets" area in the middle. The optimisation process is launched by clicking a button as shown in Figure 6 and the results are show in the "Results" window on the right in Figures 5 and 6, which can be expanded to analyse the results in more details.

The user interface preferably graphically represents the object, constituents, rules, parameters and attributes as manipulable and combinable graphical items. Combining, changing and/or re-ordering of the graphical items causes changes to the object and those changes are detected by the system via the user interface and applied to the object stored in the repository.

For example, a rule may be represented as an object that at least partially encapsulates constituents. In this way, a user can drag and drop the encapsulating rule and insert constituents to which the rule applies before attaching blocks or other elements representing attributes, parameters etc. Another rule may also be added as a further item encapsulating other constituents, for example.

In one embodiment, the system 10 may process objects as they are created or manipulated to determine optimal settings and/or detect potentially high risk or conflicting settings that have been selected. These are presented to the user via the graphical user interface to resolve the high risk or conflicting settings and have the option of taking the optimal settings. Conflicting and optimal settings may be visually represented such as by being colour coded and/or may have magnitude visually indicated, for example by intensity of the colour displayed.

Figure 5 shows an example output screen illustrating the evaluation of the portfolio. Figure 6 is an illustration of the optimisation system being applied. The user is given a number of different optimisations that may be applied and following selection, parameters are optimised and the resultant optimised portfolio is displayed.

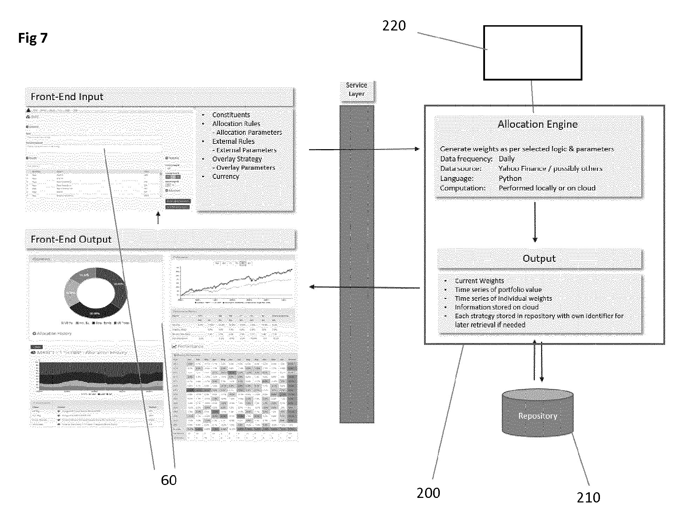

Figure 7 is a schematic diagram illustrating a simple functional representation of components of a system according to an embodiment of the present invention. The system enables the definition, creation, representation, analysis and storage of quantitative investment strategies as unique objects.

The graphical user interface 60 allows the user to enter the attributes of the strategy to be optimised, such as: Base currency, constituents, allocation methodology and overlay strategies such as FX Hedging or Risk on/off. The initial parameters may optionally be preselected and changed by the user.

The calculation engine 200 is an engine which computes the performance of a strategy based on historical and/or forward looking results. As previously discussed, the calculation engine 200 may be local to the system 10 or a remote system. Figure 5 shows the output from evaluating the strategy discussed in the above example object.

The combination of the graphical user interface 60 and calculation engine 200 gives the user a means to perform simulations over a wide range of parameters, thereby allowing the user to identify the set of parameters which produces the best results in accordance to specific optimisation criteria.

The engine 200 is connected to a database 210 in the repository 40 in which the objects of each strategy created are stored. Each strategy is labelled in the database 210 with a unique identifier.

The database 210 acts as a repository containing all objects created with their associated attributes, parameters and any output from simulations performed.

In order to accelerate and systematize the process, an optimisation system 220 can be added which (i) allows the user to select specific optimization criteria and (ii) orders the platform to find the parameter set which best meets the optimisation condition(s), as shown below.

When completed, the iterative searching process displays the strategy which best meets the optimisation criteria entered by the user. This enables the user to save time and find in a few seconds the optimal set of parameters for the chosen strategy and selected optimisation criteria.

It will be appreciated that the objects 100 discussed above are building blocks that could themselves be treated as constituents in forming more complex objects. In such a situation the calculation engine 200 could systematically optimise objects from the most basic child up to parent level (so that children are evaluated and that analysis is available to determine how to weight them in the parent object). Alternatively, a more complex optimisation may be undertaken such as using neural networks, genetic algorithms or the like in an attempt to collectively optimise all objects.

Constituents of an object 100 need not be fixed. In one embodiment, they may be varied over time based on pre-set rules. For example, an object may have a rule that the top dividend yielders of an equity index every year are for the constituents of an object.

It is to be appreciated that certain embodiments of the invention as discussed above may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

Optional embodiments of the invention can be understood as including the parts, elements and features referred to or indicated herein, individually or collectively, in any or all combinations of two or more of the parts, elements or features, and wherein specific integers are mentioned herein which have known equivalents in the art to which the invention relates, such known equivalents are deemed to be incorporated herein as if individually set forth.

Although illustrated embodiments of the present invention have been described, it should be understood that various changes, substitutions, and alterations can be made by one of ordinary skill in the art without departing from the present invention.

## Claims

1. A computer-implemented object-oriented portfolio optimisation system including a data repository for storing objects to be managed by the system, each object representing a portfolio or part of a portfolio, the system further including a data feed, a processor and a memory encoding computer program code which is executed by the processor to provide the investment portfolio optimisation system, the system including:
a user interface for receiving user inputs defining and/or managing said objects, wherein the or each object comprises one or more constituents, each constituent having a link to the data feed from which data on the constituent can be accessed, each object further defining one or more rules and one or more attributes associated with the object, the rules and attributes specifying how an investment into the one or more constituents is to be applied;
the system being configured to optimise each object according to a schedule associated with the object including, for each iteration of optimisation:
obtaining data via the data feed corresponding to the constituents; and,
determining optimal weights for allocations to the object in dependence on the obtained data and rules and attributes of the object and cause storage of the object and weights in the data repository.

2. The computer-implemented object oriented portfolio optimisation system of claim 1, wherein each object is formed from a default object form.

3. The computer-implemented investment portfolio optimisation system of claim 1 or 2, wherein each object is stored in the repository as a separate object.

4. The computer-implemented object-oriented portfolio optimisation system of claim 3, wherein each object has an associated unique identifier and is referenced in said repository and in a portfolio by said unique identifier.

5. The computer-implemented object oriented portfolio optimisation system of any of claims 1 to 4, wherein the system is triggerable to determine optimal attributes and/or rules for an object.

6. The computer-implemented object oriented portfolio optimisation system of any of claims 1 to 5, wherein the user interface graphically represents the object, constituents, rules, parameters and attributes as manipulable and combinable graphical items, combining, changing and/or re-ordering of the graphical; items being processed to determine and apply corresponding changes to the object.

7. The computer-implemented object-oriented portfolio optimisation system of any of claims 1 to 6, wherein the system is arranged to obtain data on the or each constituent via the data feed in dependence on the constituent's respective link and to evaluate the portfolio in dependence on the obtained data and on the rules and attributes associated with the object.

8. The computer-implemented object-oriented portfolio optimisation system of any preceding claim, wherein a constituent comprises a previously defined one of said objects stored in the data repository.

9. A computer-implemented object-oriented portfolio optimisation method comprising:
storing, in a data repository, objects to be managed, each object representing a portfolio or part of a portfolio, wherein the or each object comprises one or more constituents, each constituent having a link to the data feed from which data on the constituent can be accessed, each object further defining one or more rules and one or more attributes associated with the object, the rules and attributes specifying how an investment into the one or more constituents is to be applied;
receiving, via a user interface, user inputs defining and/or managing said objects, optimising each object according to a schedule associated with the object including, for each iteration of optimisation:
obtaining data via a data feed corresponding to the constituents; and,
automatically determining optimal weights for allocations to the object in dependence on the obtained data and rules and attributes of the object and cause storage of the object and weights in the data repository.

10. The method of claim 9, further comprising inheriting at least aspects of each object from a default object form.

11. The method of claim 9 or 10, further comprising storing the portfolio or part of portfolio in its object representation form.

12. The method of claim 11, wherein each object has an associated unique identifier, the method further comprising referencing objects by said unique identifier.

13. The method of any of claims 9 to 13, further comprising determining optimal attributes and/or rules for an object.

14. The method of any of claims 9 to 13, further comprising displaying, via the user interface a graphical representation of the object, constituents, rules, parameters and attributes, accepting user inputs interacting with said graphical representation to manipulate or combine elements of said graphical representation and applying corresponding changes to the object in dependence on said user inputs.

15. The method of any of claims 9 to 14, further comprising obtaining data on the or each constituent via the data feed from a remote data source in dependence on the constituent's respective link and evaluating the portfolio in dependence on the obtained data and on the rules and attributes associated with the object.
